# FASCICULE DE BREVET EUROPEEN

(11) **EP 1 458 574 B1**
(45) Date de publication et mention de la délivrance du brevet: **31.05.2006**
(21) Numéro de dépôt: 02801133.6
(22) Date de dépôt: 13.12.2002
(51) Int. Cl.: B41M 5/26

(54) **SUPPORT D INFORMATIONS MARQUEES PAR LASER**
LASER-MARKIERTER INFORMATIONSTRÄGER
LASER-MARKED DATA MEDIUM

(30) Priorité: 14.12.2001 FR 0116840
(43) Date de publication de la demande: 22.09.2004
(73) Titulaire: GEMPLUS, 13881 Gémenos Cedex (FR)
(72) Inventeur: LIMOUSIN, Isabelle, F-13950 cadolive (FR)
(86) Numéro de dépôt international: PCT/FR2002/004339
(87) Numéro de publication internationale: WO 2003/053709

(56) Documents cités:
- EP-A- 0 987 121
- WO-A-95/34263
- DE-A- 3 826 355
- US-A- 4 803 114
- US-B1- 6 248 973

## Description

La présente invention se rapporte à un support d'informations susceptibles d'être marquées par laser.

Elle concerne plus précisément un support d'informations susceptibles d'être marquées par laser comportant un substrat en matière plastique, le substrat étant revêtu d'une couche transparente aux longueurs d'onde visibles, le substrat contenant un premier pigment de marquage.

Un support d'informations de ce type est connu des documents de brevet EP 0 987 121 et WO 95/34263.

Un tel support d'information est souvent constitué d'une carte dont le substrat est constitué d'ABS injecté chargé de dioxyde de titane et est revêtu d'une couche de vernis transparent aux longueurs d'onde visibles.

Ce substrat est en général d'une couleur blanche spécifique grâce à la concentration de dioxyde de titane, qui est un pigment blanc. Le dioxyde de titane est également un pigment de marquage par laser devenant noir sous rayonnement laser YAG (laser au grenat d'yttrium et d'aluminium) de longueur d'onde égale à 1024nm. Des informations sont donc actuellement réalisées sur une telle carte par rayonnement laser et ionisation du dioxyde de titane contenu dans le substrat et création d'un plasma gris-bleu.

Cependant, compte tenu de l'impératif de coloration blanche spécifique du substrat, la concentration en dioxyde de titane dans le substrat est fixée et ne peut être aisément modifiée et il s'avère que ce marquage est de qualité insuffisante, de couleur grise. Ceci est préjudiciable à l'esthétique de la carte et également peut entraîner des problèmes sérieux d'utilisation, par exemple dans le cas de codes-barres ainsi imprimés.

Il peut être envisagé de rechercher des compositions d'ABS et de pigment dans le substrat pour résoudre ce problème de manque de contraste des informations. Cependant, en règle générale, le fabricant de carte et le fabricant de matière première pour le substrat sont différents et le premier est donc dépendant du second pour de telles modifications.

Par ailleurs, sur ce substrat est déposée une couche transparente aux longueurs d'onde visibles constituée d'un vernis servant de protection des impressions, donnant un aspect brillant et esthétique et pouvant permettre de personnaliser la carte.

La présente invention résout ce problème de manque de contraste des informations portés par de tels supports sans modification de la matière première du substrat.

Pour ce faire, conformément à l'invention, la couche transparente contient un second pigment de marquage, ce pigment étant un absorbeur des longueurs d'onde du laser.

De préférence, le premier pigment est du dioxyde de titane.

Et avantageusement, le second pigment est choisi parmi le TiO₂, le Nb₂O₅, le Sb₂O₃, le WO₃, le ZnO, le Cu₂O et le ZnS.

De préférence, la matière plastique du substrat est une matrice en ABS.

De préférence, la couche transparente aux longueurs d'onde visibles est constituée d'une matrice d'acrylate.

Selon un mode de réalisation spécifique, la concentration en poids du dioxyde de titane dans le substrat est comprise entre 4 et 8% et le second pigment est du TiO₂ de concentration en poids dans la couche transparente aux longueurs d'onde visible comprise entre 4 et 7% ou du WO₃ de concentration en poids dans la couche transparente aux longueurs d'onde visible comprise entre 4 et 12%.

L'invention est décrite ci-après plus en détail en référence à une figure selon un mode de réalisation préféré.

Un substrat 1 est constitué d'une matrice d'ABS à savoir du poly(styrène/butadiène/acrylonitrile), d'un pigment qui est une substance insoluble présentant un pouvoir couvrant et opacifiant élevé, à savoir du dioxyde de titane qui est un pigment blanc performant de bonne stabilité thermique et d'une charge qui est une substance insoluble à pouvoir couvrant et opacifiant faible, par exemple du CaCO₃, du BaSO₄, du MgO, du Al₂O₃ ou du SiO₂.

La matrice peut également être en polystyrène ou PET.

Ce substrat 1 est revêtu d'une couche 2 de matière transparente au longueurs d'onde visibles, à savoir un vernis constitué d'acrylate. Ce vernis contient également un pigment de marquage. Pour garder la transparence du vernis, ce pigment est transparent et peut être du Nb₂O₅, du Sb₂O₃, du WO₃ ,du ZnO ou du dioxyde de titane en très faible concentration.

La concentration en poids du dioxyde de titane dans la matrice d'ABS du substrat 1 est comprise entre 4 et 8%. La concentration en poids du pigment de marquage dans la matrice d'acrylate du vernis 2 est comprise entre 4 à 12% suivant le pigment en tenant compte du compromis nécessaire entre marquage et transparence de la couche transparente.

Avantageusement, le second pigment est du TiO₂ de concentration en poids dans la couche transparente aux longueurs d'onde visible comprise entre 4 et 7%, compte tenu de la couleur blanche du TiO₂, ou du WO₃ de concentration en poids dans la couche transparente aux longueurs d'onde visible comprise entre 4 et 12%.

Par rayonnement laser 3 de la surface de la couche de vernis 2, trois mécanismes se produisent :
- Une absorption du rayonnement laser par les pigments du substrat 1 et du vernis 2,
- Une génération de chaleur due à la transformation de l'énergie absorbée et une diffusion de la chaleur dans le substrat 1 et le vernis 2,
- Une ionisation par ablation des électrons de surface et création de paires électrons/trous et une création de plasma par recombinaison et émission de couleur.

Le pigment contenu dans la couche transparente de surface 2 agit en conséquence sur deux plans : après absorption du rayonnement laser, il transmet de l'énergie absorbée au dioxyde de titane du substrat 1 renforçant l'action de marquage noir de ce dernier et s'ionise lui-même augmentant le marquage par sa propre création de couleur noire.

Il est ainsi obtenu un marquage d'un noir foncé de qualité.

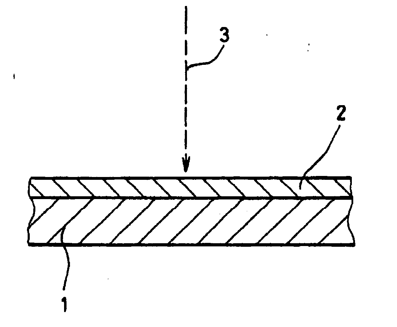

## Revendications

1. Support d'informations susceptibles d'être marquées par laser comportant un substrat (1) en matière plastique, le substrat (1) étant revêtu d'une couche (2) transparente aux longueurs d'onde visibles, le substrat (1) contenant un premier pigment de marquage par laser, **caractérisé en ce que** cette couche transparente (2) contient un second pigment de marquage par laser, ce pigment étant un absorbeur des longueurs d'onde du laser.

2. Support d'informations selon la revendication 1, **caractérisé en ce que** ledit premier pigment est du dioxyde de titane.

3. Support d'informations selon l'une des revendications précédentes, **caractérisé en ce que** ledit second pigment est choisi parmi le TiO₂, le Nb₂O₅, le Sb₂O₃, le WO₃, le ZnO, le Cu₂O et le ZnS.

4. Support d'informations selon l'une des revendications précédentes, **caractérisé en ce que** ladite matière plastique du substrat (1) est une matrice en ABS.

5. Support d'informations selon l'une des revendications précédentes, **caractérisé en ce que** ladite couche (2) transparente aux longueurs d'onde visibles est constituée d'une matrice d'acrylate.

6. Support d'informations selon l'une des revendications 2 à 5, **caractérisé en ce que** la concentration en poids du dioxyde de titane dans le substrat (1) est comprise entre 4 et 8%.

7. Support d'informations selon la revendication 3, **caractérisé en ce que** ledit second pigment est du TiO₂ de concentration en poids dans ladite couche (2) transparente aux longueurs d'onde visible comprise entre 4 à 7%.

8. Support d'informations selon la revendication 3, **caractérisé en ce que** ledit second pigment est du WO₃ de concentration en poids dans ladite couche (2) transparente aux longueurs d'onde visible comprise entre 4 à 12%.

## Claims

1. A medium for information able to marked by laser comprising a substrate (1) made from plastics material, the substrate (1) being coated with a layer (2) transparent to visible wavelengths, the substrate (1) containing a first laser marking pigment, **characterised in that** this transparent layer (2) contains a second laser marking pigment, this pigment absorbing laser wavelengths.

2. An information medium according to claim 1, **characterised in that** the said first pigment is titanium dioxide.

3. An information medium according to one of the preceding claims, **characterised in that** the said second pigment is chosen from amongst TiO₂, Nb₂O₅, Sb₂O₃, WO₃, ZnO, Cu₂O and ZnS.

4. An information medium according to one of the preceding claims, **characterised in that** the said plastics material of the substrate (1) is an ABS matrix.

5. An information medium according to one of the preceding claims, **characterised in that** the said layer (2) transparent to visible wavelengths consists of an acrylate matrix.

6. An information medium according to one of claims 2 to 5, **characterised in that** the concentration by weight of titanium dioxide in the substrate (1) is between 4% and 8%.

7. An information medium according to claim 3, **characterised in that** the said second pigment is TiO₂ in a concentration by weight in the said layer (2) transparent to visible wavelengths of between 4% to 7%.

8. An information medium according to claim 3, **characterised in that** the said second pigment is WO₃ with a concentration by weight in the said layer (2) transparent to visible wavelengths of between 4% to 12%.

## Patentansprüche

1. Zur Lasermarkierung bestimmter Informationsträger, welcher ein Substrat (1) aus Kunststoff umfasst, wobei das Substrat (1) mit einer transparenten Schicht (2) mit sichtbaren Wellenlängen beschichtet ist, wobei das Substrat (1) ein erstes Lasermarkierungspigment umfasst, **dadurch gekennzeichnet, dass** die transparente Schicht (2) ein zweites Lasermarkierungspigment enthält, wobei dieses Pigment die Wellenlängen des Laser absorbiert.

2. Informationsträger nach Patentanspruch 1, **dadurch gekennzeichnet, dass** besagtes erstes Pigment Titandioxid ist.

3. Informationsträger nach einem der vorhergehenden Ansprüche, **dadurch gekennzeichnet, dass** besagtes zweites Pigment TiO₂, Nb₂O₂, Sb₂O₃, WO₃, ZnO, Cu₂O und ZnS ist.

4. Informationsträger nach einem der vorhergehenden Ansprüche, **dadurch gekennzeichnet dass** besagter Kunststoff des Substrats (1) eine Matrix aus ABS ist.

5. Informationsträger nach einer der vorhergehenden Ansprüche, **dadurch gekennzeichnet, dass** die besagte transparente Schicht (2) mit sichtbaren Wellenlängen aus einer Acrylatmatrix besteht.

6. Informationsträger nach einem der Ansprüche 2 bis 5, **dadurch gekennzeichnet, dass** die Gewichtskonzentration von Titandioxid im Substrat (1) 4 bis 8 % beträgt.

7. Informationsträger nach Anspruch 3, **dadurch gekennzeichnet, dass** das besagte zweite Pigment TiO₂ ist, dessen Gewichtskonzentration in der besagten transparenten Schicht (2) mit sichtbaren Wellenlängen zwischen 4 und 7 % beträgt.

8. Informationsträger nach Anspruch 3, **dadurch gekennzeichnet, dass** besagtes zweites Pigment WO₃ ist und dessen Gewichtskonzentration in der besagten transparenten Schicht (2) mit sichtbaren Wellenlängen zwischen 4 und 12 % beträgt.
